# EUROPEAN PATENT APPLICATION

(11) **EP 4 192 082 A1**
(43) Date of publication of application: **07.06.2023**
(21) Application number: 21860435.3
(22) Date of filing: 25.08.2021
(51) Int. Cl.: H04W 24/02, H04W 72/12, H04L 5/00

(54) **COMMUNICATION METHOD, APPARATUS AND SYSTEM**

(30) Priority: 26.08.2020 CN 202010872834
(71) Applicant: Huawei Technologies Co., Ltd., Shenzhen, Guangdong 518129 (CN)
(72) Inventor: FENG, Shulan, Shenzhen Guangdong 518129 (CN); SHA, Tong, Shenzhen Guangdong 518129 (CN); CHANG, Junren, Shenzhen Guangdong 518129 (CN); LIU, Jianghua, Shenzhen Guangdong 518129 (CN)
(74) Representative: Isarpatent
(86) International application number: PCT/CN2021/114531
(87) International publication number: WO 2022/042600

(57) **Abstract**

This application provides a communication method, a communication apparatus, and a communication system. The communication method includes: determining that an update to a first capability set needs to be performed; and sending a first message to a network device, where the first message is used to indicate that the update to the first capability set needs to be performed for a terminal device, the first capability set includes a portion of capabilities in a second capability set, and the second capability set is a capability set negotiated by the terminal device with the network device when the terminal device initially accesses the network device. In the method, when a capability supported by the terminal device changes, the terminal device sends the first message to the network device, to indicate the network device to update a scheduling capability of the terminal device. In this way, signaling redundancy and transmission power consumption can be effectively reduced, and capability negotiation with the network device can be more flexibly performed.

## Description

### CROSS-REFERENCE TO RELATED APPLICATIONS

This application claims priority to Chinese Patent Application No. 202010872834.7, filed with the China National Intellectual Property Administration on August 26, 2020 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of communication technologies, and in particular, to a communication method, a communication apparatus, and a communication system.

### BACKGROUND

In a wireless communication system, two communication parties need to perform capability negotiation to obtain a capability supported by each other, thereby ensuring correct data processing. Cellular communication is used as an example. A terminal device sends, to a network device, capability information supported by the terminal device, for example, a multiple-input multiple-output (multiple input multiple output, MIMO) capability, a channel bandwidth, and a modulation order. After obtaining the capability information, the network device schedules a radio resource and performs data transmission and reception based on a capability identified by the terminal device, so that a radio resource scheduled for the terminal device does not exceed the capability of the terminal device.

Currently, after the capability information of the two communication parties is reported, the two communication parties do not update the capability information. However, to meet a requirement such as electricity saving, the terminal device may need to update the capability.

### SUMMARY

This application provides a communication method, a communication apparatus, and a communication system, to provide a relatively flexible manner of capability negotiation between a terminal device and a network device, thereby effectively reducing signaling redundancy and transmission power consumption.

According to a first aspect, an embodiment of this application provides a communication method, including:
determining that an update to a first capability set needs to be performed; and sending a first message to a network device, where the first message is used to indicate that the update to the first capability set needs to be performed for a terminal device, the first capability set includes a portion of capabilities in a second capability set, and the second capability set is a capability set negotiated by the terminal device with the network device when the terminal device initially accesses the network device.

Based on this solution, in this embodiment of this application, when a capability supported by the terminal device changes, the terminal device sends the first message to the network device, so that the network device that receives the first message schedules the terminal device by using the first capability set. Because the first information occupies a relatively small quantity of transmission resources, signaling redundancy and transmission power consumption can be effectively reduced. In addition, the terminal device can more flexibly perform capability negotiation with the network device by using the first message.

In a possible implementation, the first capability set is a capability in the second capability set except at least one optional capability and/or at least one mandatory capability with capability signaling.

In a possible implementation, the first capability set is a mandatory capability without capability signaling in the second capability set.

In a possible implementation, a size of the first message is 1 bit.

In a possible implementation, the first message is carried in physical layer control signaling; or the first message is carried in a reserved bit in MAC signaling; or the first message is carried in terminal assistance information in radio resource control RRC signaling; or the first message is carried in capability update information in RRC signaling.

In a possible implementation, the first message includes at least one identifier, and the at least one identifier is used to indicate a capability that is included in the second capability set but not included in the first capability set.

In a possible implementation, the first message is used to indicate a level of the first capability set.

In a possible implementation, the first message is further used to indicate at least one of the following: a reason why the update to the first capability set needs to be performed, an application start time of the first capability set, and application duration of the first capability set.

In a possible implementation, the first capability set is at least two capability sets, and the first message is further used to indicate an application sequence of the at least two capability sets.

In a possible implementation, the method further includes: communicating with the network device by using the second capability set after the application duration of the first capability set ends.

In a possible implementation, the first message is further used to indicate that the update to the first capability set needs to be performed for the terminal device after application duration of the second capability set ends.

In a possible implementation, an interval of sending the first message is not less than a first threshold.

According to a second aspect, an embodiment of this application provides a communication method, including:
receiving a first message from a terminal device; and determining, based on the first message, to schedule the terminal device based on a first capability set, where the first capability set includes a portion of capabilities in a second capability set, and the second capability set is a capability set negotiated by the terminal device with a network device when the terminal device initially accesses the network device.

Based on this solution, in this embodiment of this application, when a capability supported by the terminal device changes, the terminal device sends the first message to the network device, so that the network device that receives the first message schedules the terminal device by using the first capability set. Because the first information occupies a relatively small quantity of transmission resources, signaling redundancy and transmission power consumption can be effectively reduced. In addition, the terminal device can more flexibly perform capability negotiation with the network device by using the first message.

In a possible implementation, the first capability set is a capability in the second capability set except at least one optional capability and/or at least one mandatory capability with capability signaling.

In a possible implementation, the first capability set is a mandatory capability without capability signaling in the second capability set.

In a possible implementation, a size of the first message is 1 bit.

In a possible implementation, the first message is carried in physical layer control signaling; or the first message is carried in a reserved bit in MAC signaling; or the first message is carried in terminal assistance information in radio resource control RRC signaling; or the first message is carried in capability update information in RRC signaling.

In a possible implementation, the first message includes at least one identifier, and the at least one identifier is used to indicate a capability that is included in the second capability set but not included in the first capability set.

In a possible implementation, the first message is used to indicate a level of the first capability set.

In a possible implementation, the first message is further used to indicate at least one of the following: a reason why the update to the first capability set needs to be performed, an application start time of the first capability set, and application duration of the first capability set.

In a possible implementation, the first capability set is at least two capability sets, and the first message is further used to indicate an application sequence of the at least two capability sets.

In a possible implementation, the method further includes: communicating with the network device by using the first capability set after the application duration of the first capability set ends.

In a possible implementation, the first message is further used to indicate that the update to the first capability set needs to be performed for the terminal device after application duration of the second capability set ends.

In a possible implementation, an interval of sending the first message is not less than a first threshold.

According to a third aspect, an embodiment of this application provides a communication apparatus. The apparatus includes at least one processing unit and at least one storage unit. The storage unit stores program code. When the program code is executed by the processing unit, the processing unit is enabled to perform the following process:
The processing unit is configured to determine that an update to a first capability set needs to be performed.

The communication unit is configured to send a first message to a network device. The first message is used to indicate that the update to the first capability set needs to be performed for a terminal device. The first capability set includes a portion of capabilities in a second capability set. The second capability set is a capability set negotiated by the terminal device with the network device when the terminal device initially accesses the network device.

According to a fourth aspect, an embodiment of this application provides a communication apparatus. The apparatus includes at least one processing unit and at least one storage unit. The storage unit stores program code. When the program code is executed by the processing unit, the processing unit is enabled to perform the following process:
The communication unit is configured to receive a first message from a terminal device.

The processing unit is configured to determine, based on the first message, to schedule the terminal device based on a first capability set. The first capability set includes a portion of capabilities in a second capability set. The second capability set is a capability set negotiated by the terminal device with a network device when the terminal device initially accesses the network device.

According to a fifth aspect, an embodiment of this application provides a communication apparatus. The communication device implements any method according to any one of the first aspect or the second aspect of the foregoing embodiments, or any one of possible implementations of the first aspect and the second aspect.

In a possible implementation, the communication apparatus may be a terminal device, or a component that can be used in a terminal device, for example, a chip, a chip system, or a circuit. A capability negotiation apparatus of the terminal device may include a transceiver and a processor. The processor may be configured to support the capability negotiation apparatus of the terminal device in performing the foregoing corresponding functions of the terminal device. The transceiver is configured to support communication between the capability negotiation apparatus of the terminal device and another device (for example, a network device).

Optionally, the capability negotiation apparatus of the terminal device may further include a memory. The memory may be coupled to the processor. The memory stores program instructions and data that are necessary for the communication apparatus. The transceiver may be an independent receiver, an independent transmitter, a transceiver integrating receiving and sending functions, or an interface circuit.

In a possible implementation, the communication apparatus may be a network device, or a component that can be used in a network device, for example, a chip, a chip system, or a circuit. A capability negotiation apparatus of the network device may include a transceiver and a processor. The processor may be configured to support the capability negotiation apparatus of the terminal device in performing the foregoing corresponding functions of the network device. The transceiver is configured to support communication between the capability negotiation apparatus of the terminal device and another device (for example, a terminal device).

Optionally, the communication apparatus may further include a memory. The memory may be coupled to the processor. The memory stores program instructions and data that are necessary for the communication apparatus. The transceiver may be an independent receiver, an independent transmitter, a transceiver integrating receiving and sending functions, or an interface circuit.

According to a sixth aspect, an embodiment of this application provides a communication system, including a terminal device and a network device.

The terminal device is configured to perform any method according to any one of the first aspect or the possible implementations of the first aspect. The network device is configured to perform any method according to any one of the second aspect or the possible implementations of the second aspect.

According to a seventh aspect, an embodiment of this application provides a chip system. The chip system includes a processor, and optionally further includes a memory. The memory is configured to store a computer program. The processor is configured to invoke the computer program from the memory and run the computer program, so that a communication apparatus on which the chip system is installed performs any method according to any one of the first aspect, or the second aspect, or any possible implementation of the first aspect and the second aspect.

According to an eighth aspect, an embodiment of this application provides a computer program product. The computer program product includes computer program code. When the computer program code is run by a communication unit and a processing unit, or a transceiver and a processor of a communication apparatus, the communication apparatus is enabled to perform any method according to any one of the first aspect, or the second aspect, or any possible implementation of the first aspect and the second aspect.

According to a ninth aspect, an embodiment of this application provides a computer readable storage medium. The computer readable storage medium stores a program. The program enables a communication apparatus (for example, a terminal device or a network device) to perform any method according to any one of the first aspect, or the second aspect, or any possible implementation of the first aspect and the second aspect.

### BRIEF DESCRIPTION OF DRAWINGS

FIG. 1 is a schematic diagram of a capability negotiation scenario of a terminal device according to this application;
FIG. 2 is a schematic diagram of device module construction in capability negotiation of a terminal device according to this application;
FIG. 3 is a schematic diagram of a communication method according to this application;
FIG. 4 is a schematic flowchart of a first communication method according to an embodiment of this application;
FIG. 5 is a schematic flowchart of a second communication method according to an embodiment of this application;
FIG. 6 is a schematic flowchart of a third communication method according to an embodiment of this application;
FIG. 7 is a schematic flowchart of a fourth communication method according to an embodiment of this application;
FIG. 8 is a schematic diagram of a first communication apparatus according to this application;
FIG. 9 is a schematic diagram of a second communication apparatus according to this application; and
FIG. 10 is a schematic diagram of a terminal device according to this application.

### DESCRIPTION OF EMBODIMENTS

The following describes this application in detail with reference to the accompanying drawings of this specification.

In a wireless communication system, two communication parties need to perform capability negotiation to obtain a capability supported by each other, thereby ensuring correct data processing. Cellular communication is used as an example. A terminal device sends, to a network device, capability information supported by the terminal device, for example, a multiple-input multiple-output (multiple input multiple output, MIMO) capability, a channel bandwidth, and a modulation order. After obtaining the capability information, the network device schedules a radio resource and performs data transmission and reception based on a capability identified by the terminal device, so that a radio resource scheduled for the terminal device does not exceed the capability of the terminal device.

For example, in a 4G system, a plurality of types of terminals are defined. Each type of terminal corresponds to a different peak rate. For example, if the capability reported by the terminal device is UE categories 4, it indicates that the terminal device supports a downlink peak rate of 150 Mbps and an uplink peak rate of 51 Mbps; if the capability reported by the terminal device is UE categories DL 12, it indicates that the terminal device supports a downlink peak rate of 600 Mbps; or if the capability reported by the terminal device is UE categories DL 19, it indicates that the terminal device supports a downlink peak rate of 1.6 Gbps.

In addition, the terminal device may further report information such as a maximum quantity of supported MIMO layers, a maximum carrier aggregation bandwidth, and a highest modulation order to a base station.

For example, in a 5G system, the peak rate supported by the terminal device is calculated based on the information such as the quantity of supported MIMO layers, the carrier aggregation bandwidth, and the highest modulation order that are reported by the terminal device.

However, after the capability information of the two communication parties is reported, the two communication parties do not update the capability information. If the peak rate in the capability information previously reported by the terminal device is relatively high, it indicates that the terminal device has a stronger processing capability and higher power consumption. When the terminal device needs to save electricity later, the terminal device expects to update the capability information of the terminal device, so that the capability information reported by the terminal device better complies with electricity saving configuration. For example, the peak rate in the reported capability information is relatively low.

The terminal device may register with a network again, and report the capability of the terminal device again, to implement an update of the capability. However, when the capability is updated in this manner, because the capability information of the terminal device has a relatively large signaling load that is generally greater than 1000 bytes, reporting the capability information again causes additional system overheads, and a process of registering with the network again causes an additional delay and additional power consumption for the terminal device.

In addition, the terminal device may further report, to the network device by using assistance information, a radio resource limitation that is expected to be updated, to reduce power consumption. However, although problems such as a delay increase caused in registering with the network again are avoided by using the assistance information, an excessively large amount of the assistance information needs to be reported, thereby causing relatively large system overheads. In addition, more assistance information reported by the terminal device indicates that the network device needs to consider more scheduling factors, thereby increasing scheduling complexity of the base station.

An embodiment of this application provides a flexible and efficient capability information negotiation method between a network device and a terminal device. Technical solutions in the embodiments of this application may be applied to various communication systems, for example, a long term evolution (long term evolution, LTE) system, a worldwide interoperability for microwave access (worldwide interoperability for microwave access, WiMAX) communication system, a future 5th generation (5th Generation, 5G) system such as a new radio access technology (new radio access technology, NR), and a future communication system such as a 6G system.

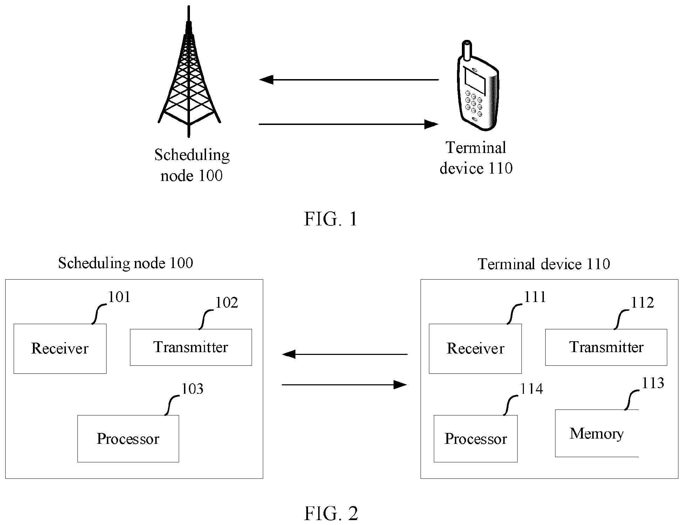

For ease of understanding the embodiments of this application, a communication system shown in FIG. 1 is first used as an example to describe in detail a communication system to which the embodiments of this application are applicable. As shown in FIG. 1, the communication system includes a scheduling node 100 and a terminal device 110. The scheduling node 100 may be a network device or a terminal device.

When the scheduling node is a network device, the network device may be in the following several types: for example, an access network (access network, AN) device and a radio access network (radio access network, RAN) device. The access network device, for example, a base station (for example, an access point), may be a device, in an access network, that communicates with a wireless terminal device over an air interface through one or more cells. The base station may be configured to mutually convert a received over-the-air frame and an Internet protocol (IP) packet, and serve as a router between the terminal device and a remaining part of the access network. The remaining part of the access network may include an IP network. The network device may further coordinate attribute management of the air interface. For example, the network device may include an evolved NodeB (NodeB, eNB, or e-NodeB, evolved NodeB) in a long term evolution (long term evolution, LTE) system or a long term evolution-advanced (long term evolution-advanced, LTE-A) system; may include a next generation NodeB (next generation NodeB, gNB), a next generation evolved NodeB (next generation evolved NodeB, ng-eNB), or an enhanced next generation NodeB en-gNB (enhanced next generation NodeB, gNB) in a 5th generation (5th generation, 5G) mobile communication technology new radio (new radio, NR) system; may include a centralized unit (centralized unit, CU) and a distributed unit (distributed unit, DU) in a cloud access network (cloud radio access network, Cloud RAN) system; or may further include a relay device. This is not limited in the embodiments of this application.

The terminal device 110 is a device that provides voice and/or data connectivity for a user, and may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal in the embodiments of this application may be a mobile phone (mobile phone), a tablet computer (Pad), a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), or the like.

As shown in FIG. 2, in an optional manner in an embodiment of this application, a scheduling node includes a receiver 101, a transmitter 102, and a processor 103. The receiver 101 is configured to receive a radio signal of a terminal. The processor 103 is configured to: obtain a capability of the terminal device from the radio signal received by the receiver, and make, based on the capability of the terminal device, a scheduling decision that meets the capability of the terminal device. The scheduling decision is sent to a terminal device by using the transmitter 102. In addition, the receiver 101, the transmitter 102, and the processor 103 are further responsible for receiving and processing an uplink signal of the terminal device, and determining a downlink signal to be sent to the terminal device and sending the downlink signal.

In an optional manner of this embodiment of this application, the terminal device includes a receiver 111 and a transmitter 112. The receiver 111 is configured to receive a downlink signal from a base station. The transmitter 112 is configured to send the uplink signal to the scheduling node. Further, the terminal device may further include at least one memory 113, configured to store a capability of the terminal. The terminal device further includes at least one processor 114. The processor 114 includes a plurality of processing units. The processor 114 is configured to: generate capability report message data of the terminal device based on terminal capability information stored in the memory, and further send the capability report message data to the scheduling node by using the transmitter 112. In addition, the processor may further include at least one scheduling unit, configured to process downlink data and/or uplink data based on resource scheduling information of the scheduling node.

Network architecture and a service scenario described in this embodiment of this application are intended to describe the technical solutions in the embodiments of this application more clearly, and do not constitute any limitation on the technical solutions provided in the embodiments of this application. A person of ordinary skill in the art may know that with evolution of the network architecture and emergence of a new service scenario, the technical solutions provided in the embodiments of this application are also applicable to similar technical problems. It should be understood that FIG. 1 and FIG. 2 are merely simplified example schematic diagrams for ease of understanding. The communication system may further include a core network device, another network device, another terminal device, or the like. Alternatively, the scheduling node may further include another component or unit module, and the terminal device may further include another component or unit module, which is not shown in FIG. 1 and FIG. 2.

Some terms in the embodiments of this application are explained and described below for ease of understanding.
(1) A "second capability set" in the embodiments of this application is a capability set negotiated by the terminal device with the network device when the terminal device initially accesses the network device.
(2) A "first capability set" in the embodiments of this application is a portion of capabilities in the second capability set, for example, a capability other than at least one optional capability and/or at least one mandatory capability with capability signaling; or is a mandatory capability without capability signaling. For example, the first capability set in the embodiments of this application may be a basic capability set, that is, an only capability that can be supported by the terminal device when power consumption is the lowest. The capability may be understood as a capability that the terminal device needs to support as required by the protocol.
   For example, the second capability set includes a capability A, a capability B, and a capability C; and the first capability set includes the capability B and the capability C. In other words, when an update to the first capability set is performed for the terminal device, the terminal device does not support the capability A.
(3) In the embodiments of this application, the "capability" (capability) indicates whether the terminal device has a capability of supporting a feature (feature) or a feature set (feature set).
(4) "Capability information" in the embodiments of this application is a set of functions or features included in a capability, and may also be referred to as a capability set or a capability parameter.

For example, capability information corresponding to a capability includes some or all of the following:
a quantity of downlink CCs supported by the terminal device, a quantity of supported uplink CCs, a supported downlink bandwidth, a supported uplink bandwidth, a supported quantity of MIMO layers, a supported downlink aggregation bandwidth, a supported uplink aggregation bandwidth, and the like.

Further, in the embodiments of this application, different basic capabilities are determined for different types of terminal devices. For example, a terminal device in an ultra-reliable and low latency communication (ultra-reliable low-latency communication, URLLC) type and a terminal device in an Internet of vehicles (vehicle to everything, V2X) type have different basic capabilities. Different types of terminal devices are also referred to as terminal devices with different features. Specific capabilities of these terminal devices are also referred to as a feature set (feature set).

3GPP NR Rel-15 is used as an example. 3GPP defines a series of capabilities (for details, refer to 3GPP TR 38.822).

A mandatory capability without capability signaling (mandatory without capability signaling) is a mandatory capability that the terminal device needs to support and that does not require capability signaling reporting. This capability does not need to be sent to the network device in a capability information reporting manner. This capability may also be referred to as a basic capability (baseline capability). For ease of description, the mandatory capability without capability signaling belongs to a first part of capabilities according to a definition.

An optional (optional) capability is a capability that is optionally supported by the terminal device. Whether this capability is supported needs to be reported through signaling. The mandatory capability with capability signaling (mandatory with capability signaling) is a mandatory capability that the terminal device needs to support and that requires signaling reporting to indicate whether the mandatory capability is supported (for details, refer to Section 4.2 in 3GPP TS 38.306). If the terminal device reports that the capability is supported, it indicates that the capability passes an interconnection test. If the terminal device does not report that the capability is supported, it indicates that the capability of the terminal device does not pass the interconnection test. For ease of description, the optional capability and the mandatory capability with capability signaling belong to a second part of capabilities according to a definition.

In addition, a combination of a frequency band and a frequency range that are supported by the terminal device is also a part of the capability of the terminal device. In an optional manner of the embodiments of this application, single carrier communication of the terminal device in a supported frequency band is defined as a first part of capabilities, that is, basic capabilities, and a capability supporting carrier aggregation is defined as a second part of capabilities.

The "second capability set" described in this application may include the first part of capabilities and the second part of capabilities defined above. In one case, the "first capability set" described in this application includes only the first part of capabilities defined above. Alternatively, in one case, in addition to the first part of capabilities defined above, the "first capability set" further includes some of the second part of capabilities. In other words, the "first capability set" is a subset of the "second capability set", and includes at least one or some of the second part of capabilities.

In the embodiments of this application, a term "at least one" means one or more, and "a plurality of means two or more. The term "and/or" describes an association relationship between associated objects and represents that three relationships may exist. For example, A and/or B may represent the following three cases: Only A exists, both A and B exist, and only B exists. A and B may be in a singular or plural form. The character "/" usually indicates an "or" relationship between associated objects. At least one of the following items (pieces) or a similar expression thereof indicates any combination of these items, including a single item (piece) or any combination of a plurality of items (pieces). For example, at least one (piece) of a, b, and c, or at least one of a, b, or c may indicate: a; b; c; a and b; a and c; b and c; or a, b, and c. Herein, a, b, and c may be in a singular or plural form.

Unless otherwise stated, ordinal numbers such as "first" and "second" mentioned in the embodiments of this application are intended to distinguish a plurality of objects, rather than limit an order, a time sequence, priorities, or importance degrees of the plurality of objects.

In addition, the terms "include" and "have" in the embodiments, claims, and accompanying drawings of this application are not exclusive. For example, a process, a method, a system, a product, or a device including a series of steps or modules is not limited to the listed steps or modules, and may further include steps or modules that are not listed.

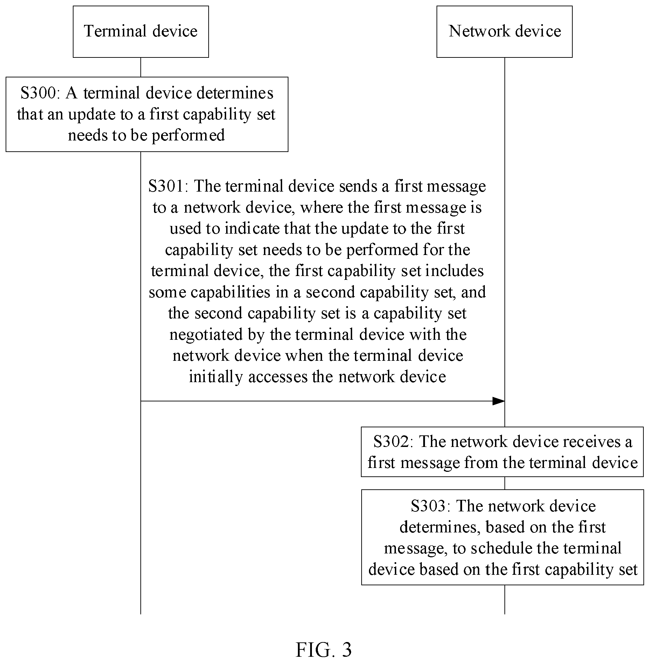

Based on description of content such as the foregoing application scenario, an embodiment of this application provides a communication method. As shown in FIG. 3, the method includes the following steps:
S300: A terminal device determines that an update to a first capability set needs to be performed.

The terminal device may determine, based on a usage status of the terminal device, a service status of the terminal device, user configuration information of the terminal device, or the like, that the update to the first capability set needs to be performed.

Further, before step S300, the method further includes: A network device sends a fourth message to the terminal device. The fourth message is used to indicate that the network device allows the update to the first capability set to be performed for the terminal device.

Further, the fourth message is further used to indicate a specific first capability set or specific first capability sets to which the network device allows the update performed for the terminal device.

Further, before step S300, the method further includes: The network device sends an eighth message to the terminal device. The eighth message is used to indicate a first capability set level and/or a first capability set type supported by the network device. The terminal device may learn of a capability of the network device based on the eighth message, thereby avoiding a communication failure caused due to capability mismatch between the terminal device and the network device.

S301: The terminal device sends a first message to the network device. The first message is used to indicate that the update to the first capability set needs to be performed for the terminal device. The first capability set includes a portion of capabilities in a second capability set. The second capability set is a capability set negotiated by the terminal device with the network device when the terminal device initially accesses the network device.

In this embodiment of this application, the first message indicates a plurality of cases. The cases are not specifically limited to the following several cases:
In a case 1 indicated by the first message: The first message indicates at least one identifier.

The at least one identifier is used to indicate a capability that is included in the second capability set but not included in the first capability set. In other words, the first message indicates a capability that is not supported by the terminal device in the second capability set.

Therefore, the network device may determine the first capability set based on the at least one identifier indicated by the first message and the second capability set.

For example, the second capability set includes a capability A, a capability B, a capability C, and a capability D; and identifiers indicated by the first message represent the capability A and the capability C. Therefore, after receiving the first message, the network device removes the capability A and the capability B from the second capability set, to obtain the first capability set. In other words, the first capability set includes the capability C and the capability D.

In a case 2 indicated by the first message, the first message indicates the level of the first capability set or the type of the first capability set.

A plurality of levels may be defined for the capability set. Different capability levels correspond to different peak rates. The different peak rates correspond to specific carrier aggregation capabilities, quantities of MIMO layers, bit rates, and modulation orders. For example, a level 1 indicates that a peak rate of 300 Mbps is supported, a level 2 indicates that a peak rate of 600 Mbps is supported, a level 3 indicates that a peak rate of 2.3 Gbps is supported, and a level 4 indicates a peak rate of 4.6 Gbps.

Alternatively, a plurality of different types may be defined for the capability set. For example, a type 1 represents an enhanced mobile broadband (Enhanced Mobile Broadband, eMBB) terminal device, a type 2 represents a URLLC terminal device, a type 3 represents a V2X terminal device, a type 4 represents a low-capability (REDCap) terminal device, and a type 5 represents a positioning terminal device with low power consumption.

When the first message indicates the level of the first capability set, the method further includes: Before step S301, the terminal device sends a second message to the network device. The second message is used to indicate the level of the first capability set supported by the terminal device.

In this embodiment of this application, there are a plurality of manners of using the second message to indicate the level of the first capability set supported by the terminal device. This is not specifically limited to the following several manners.

In a manner 1, the level of the first capability supported by the terminal device may be represented by a level number, for example, a level 1, a level 2, a level 3, or a level 4.

Preferably, the level number in this embodiment of this application corresponds to detailed configuration information of a level corresponding to the level number. For example, the level 1 corresponds to a peak rate of 300 Mbps, and the level 4 corresponds to a peak rate of 4.6 Gbps.

In a manner 2, the level of the first capability set is represented by one or more of parameters such as a carrier aggregation capability, a quantity of MIMO layers, a bit rate, and a modulation order corresponding to a capability level. Preferably, the second message is a set of values of key parameters that are supported by the terminal device and that are used to calculate a peak rate.

For example, the terminal device supports two parameter sets. Herein, a parameter set I ={ a maximum quantity of carriers is equal to 1, a maximum carrier bandwidth is equal to 20 MHz, a maximum quantity of MIMO layers is equal to 4, and a maximum modulation order is equal to 64QAM}, and a parameter set 2={a maximum quantity of carriers is equal to 2, a maximum carrier bandwidth is equal to 100 MHz, a maximum quantity of MIMO layers is equal to 4, and a maximum modulation order is equal to 256QAM}.

When the first message indicates the type of the first capability set, the method further includes: Before step S301, the terminal device sends a third message to the network device. The third message is used to indicate the type of the first capability set supported by the terminal device. For example, the third message indicates that the terminal device is in an eMBB type, a URLLC type, a REDCap type, or the like.

In a case 3 indicated by the first message, the first message indicates that the level of the first capability set is a basic capability.

S302: The network device receives the first message from the terminal device.

S303: The network device determines, based on the first message, to schedule the terminal device by using the first capability set.

In an optional manner of this embodiment of this application, there are a plurality of cases of the first capability set. The cases are not specifically limited to the following several cases:
In a case 1 of the first capability set, the first capability set is a capability in the second capability set except at least one optional capability and/or at least one mandatory capability with capability signaling.
In a case 2 of the first capability set, the first capability set is a mandatory capability without capability signaling in the second capability set.
In a case 3 of the first capability set, the first capability set includes different capability levels. Different capability levels correspond to different peak rates. The different peak rates correspond to specific carrier aggregation capabilities, quantities of MIMO layers, bit rates, and modulation orders.
   For example, a level 1 indicates that a peak rate of 300 Mbps is supported, a level 2 indicates that a peak rate of 600 Mbps is supported, a level 3 indicates that a peak rate of 2.3 Gbps is supported, and a level 4 indicates a peak rate of 4.6 Gbps. The at least one first capability set is a basic capability. The basic capability supports only a second part of capabilities.
In a case 4 of the first capability set, the first capability set includes different capability types. For example, a type 1 represents an eMBB terminal device, a type 2 represents a URLLC terminal device, a type 3 represents a V2X terminal device, a type 4 represents a REDCap terminal device, and a type 5 represents a positioning terminal device with low power consumption.

That the network device determines, based on the first message, to schedule the terminal device by using the first capability set specifically indicates that the network device performs radio resource control RRC configuration or reconfiguration on the terminal device based on the capability information indicated by the first capability set. The RRC reconfiguration does not exceed a capability indicated by the first capability set. The network device communicates with the terminal device based on a radio resource indicated according to the reconfiguration.

The following further describes the communication method in this application in detail with reference to descriptions of specific embodiments and accompanying drawings of this specification. The embodiments in this application may be combined with each other. In addition, explanations of features in the embodiments may be applicable to other embodiments.

In a scenario 1, the first message carries an identifier of an unsupported capability.

Therefore, the network device that receives the first message removes these unsupported capabilities from the second capability set, to obtain the first capability set; and schedules the terminal device by using the first capability set.

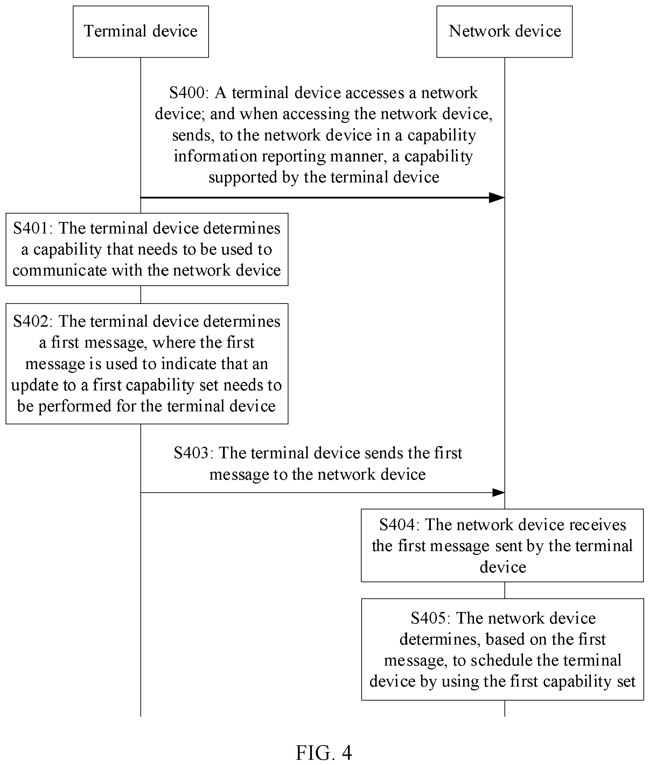

As shown in FIG. 4, based on the scenario 1, specific steps of communication between the terminal device and the network device in this embodiment of this application are as follows:
S400: A terminal device accesses a network device; and when accessing the network device, sends, to the network device in a capability information reporting manner, a capability supported by the terminal device.

For example, when registering with a network, if the terminal device determines that the capability currently supported by the terminal device is a second capability set, the terminal device reports a capability parameter (or capability information) corresponding to the second capability set to the network device.

The capability information corresponding to the second capability set indicates an optional (optional) capability that is defined in a specific protocol and that is supported by the terminal device or a mandatory capability with capability signaling (mandatory with capability signaling) that is defined in specific protocols and that is supported by the terminal device.

It may be understood that the second capability set is a capability that is used by the network device to schedule the terminal device before the network device receives the first message.

3GPP NR Rel-15 is used as an example. 3GPP defines a series of capabilities (for details, refer to 3GPP TR 38.822).

A first part of capabilities are mandatory capabilities that the terminal device needs to support and that do not require capability signaling reporting. These capabilities do not need to be sent to the network device in a capability information reporting manner. These capabilities are also referred to as basic capabilities.

A second part of capabilities are capabilities that are optionally supported by the terminal device. Whether these capabilities are supported needs to be reported by using signaling. Alternatively, a second part of capabilities are mandatory capabilities that the terminal device needs to support and that require signaling reporting to indicate whether the mandatory capabilities are supported, that is, mandatory capabilities with capability signaling (for details, refer to Section 4.2 in 3GPP TS 38.306). If the terminal device reports that the capability is supported, it indicates that the capability passes an interconnection test. If the terminal device does not report that the capability is supported, it indicates that the capability of the terminal device does not pass the interconnection test.

In addition, a combination of a frequency band and a frequency range that are supported by the terminal device is also a part of the capability of the terminal device. In an optional manner of this embodiment of this application, single carrier communication of the terminal device in a supported frequency band is defined as the first part of capabilities, that is, basic capabilities, and a capability supporting carrier aggregation is defined as the second part of capabilities.

Different types of terminal devices may have different mandatory capabilities that require capability signaling reporting and different optional capabilities. For example, an eMBB-type terminal device and a URLLC-type terminal device need to support different mandatory capabilities.

For example, when registering with the network, the terminal device reports, by using capability parameters of the terminal device, the capability supported by the terminal device. The capability parameters are the second capability set. The second capability set indicates optional capabilities supported by the terminal device, and/or mandatory capabilities with capability signaling that require signaling reporting and that are supported by the terminal device. In other words, the second capability set includes a first part of capabilities and a second part of capabilities that are defined by 3GPP.

Further, in an optional method in this embodiment of this application, a definition manner of the first capability set in this embodiment of this application is that the first capability set is a portion of capabilities that are not supported by the terminal device in the second capability set. For example, the first capability set is determined after at least one optional capability and/or at least one mandatory capability with capability signaling are/is removed from the second capability set. It may be understood that the first capability set is a capability lower than the second capability set.

For example, it is assumed that the second capability set indicates that the terminal device supports an optional capability 1, an optional capability 2, an optional capability 3, a mandatory capability 1 with capability signaling, and a mandatory capability 2 with capability signaling. The first capability set is a capability obtained after the terminal device does not support a portion of capabilities in the second capability set. For example, in comparison with the second capability set, the first capability set does not support the optional capability 1, the optional capability 2, and the mandatory capability 1 with capability reporting signaling. In other words, the first capability set indicates that the terminal device supports only the optional capability 3 and the mandatory capability 2 with capability reporting signaling in addition to a capability that needs to be supported and that does not require reporting.

Further, another definition manner of the first capability set in this embodiment of this application is that the first capability set indicates that the terminal device does not support all the second part of capabilities supported in the second capability set.

In a specific implementation method, the first capability set indicates that the terminal device supports only a capability that is defined in a protocol, that needs to be supported, and that does not require signaling reporting. In this case, it may be understood that the first capability set is a capability or a basic capability that this type of terminal device needs to support as required by the protocol.

For example, it is assumed that the second capability set indicates that the terminal device supports an optional capability 1, an optional capability 2, an optional capability 3, a mandatory capability 1 with capability signaling, and a mandatory capability 2 with capability signaling. The first capability set indicates that the terminal device does not support all capabilities supported in the first capability. In other words, the terminal device does not support the optional capability 1, the optional capability 2, the optional capability 3, the mandatory capability 1 with capability signaling, and the mandatory capability 2 with capability signaling; and supports only the basic capability.

Further, when accessing the network device, the terminal device sends the second capability set to the network device in a capability information reporting manner.

For example, the capability information reporting manner uses the conventional technology. One conventional technology is a manner defined in Section 5.6 in 3GPP TS 38.331, and another conventional technology is a manner defined in Section 5.6 in 3GPP TS 36.331. Details are not described in this application.

Further, in this embodiment of this application, the terminal device may determine capability information of the terminal device in a plurality of manners. This is not limited in this embodiment of this application.

For example, the terminal device determines the capability of the terminal device based on a design specification of the terminal device.

In this embodiment of this application, there are a plurality of cases in which the terminal device is triggered to report the capability information to the network device. The cases are not specifically limited to the following several cases:
In a case 1, the terminal device receives capability report request information sent by the network device. The capability report request information requires the terminal device to send the capability information to the network device.
In a case 2, when initially accessing the network, the terminal device reports the capability information to the network device.

S401: The terminal device determines a capability that needs to be used to communicate with the network device.

For example, it is assumed that a capability negotiated by the terminal device with the network device during network registration is the second capability set. However, currently, when the terminal device communicates with the network device, it is more proper to use the first capability set. In this case, the terminal device determines that the first capability set needs to be used during communication with the network device.

In other words, in this case, the terminal device determines to change a scheduling capability from the second capability set to the first capability set.

In this embodiment of this application, the terminal device may determine, in a plurality of manners, a specific capability to be used for scheduling. This is not specifically limited to the following several manners:
In a determining manner 1, the terminal device determines, based on an actual status of the terminal device, that the capability of the terminal device changes; and needs to update the capability information of the terminal device to the network device.

For example, it is assumed that the capability previously determined by the terminal device is the second capability set. The second capability set requires that the terminal device has a relatively strong processing capability. Therefore, in configuration of the second capability set, the terminal device has relatively large system overheads and electricity overheads. In addition, the terminal device has relatively good performance because the terminal device has a relatively strong processing capability. When the terminal device has a sufficient electricity quantity, or when the terminal device requires higher performance, the terminal device determines to use the second capability set to communicate with the network device.

It is assumed that the first capability set is the basic capability of the terminal device. For example, when the terminal device needs to save electricity, or when the electricity quantity of the terminal device is lower than a specific value, for example, when the electricity quantity of the terminal device is lower than 20%, the terminal device determines to use the first capability set to communicate with the network device.

For example, it is assumed that the capability previously determined by the terminal device is the second capability set, and the second capability set indicates that the terminal device supports both an enhanced mobile broadband (enhanced mobile broadband, eMBB) access function and a V2X function. Therefore, in configuration of the second capability set, the terminal device has a relatively strong processing capability, and can process an in-vehicle communication scenario. When the terminal device is not in a vehicle, the terminal device determines that the V2X function is removed from the terminal device.

In a determining manner 2, the terminal device determines, based on a received message from a higher layer or an application layer, that the capability of the terminal device changes, and needs to update the capability information of the terminal device to the network device.

For example, it is assumed that the terminal device receives indication information from a higher layer of a protocol stack of the terminal, for example, information from a radio resource control RRC layer or an application layer. The information indicates that the terminal device is required to have optimal performance or lowest power consumption, or the information indicates that the terminal device needs to use the second capability set or the first capability set.

For example, the terminal device receives a configuration indication sent by a user. The configuration indication indicates that the terminal device needs to fall back to the basic capability. Therefore, the terminal device determines, based on the configuration indication sent by the user, to use the first capability set to communicate with the network device. Alternatively, for example, the terminal device determines, based on a message of the application layer, that relatively good communication performance needs to be maintained for a current service. In this case, the terminal device determines to use the second capability set to communicate with the network device.

In a manner 3, the terminal device determines a to-be-used capability according to a specific rule.

For example, an optional rule in this embodiment of this application is that if the terminal device determines that the current service is a small-sized service that can accept a relatively high delay, the terminal device communicates with the network device by using the first capability set.

If the terminal device determines that the current service is a low-delay service, the terminal device communicates with the network device by using the second capability set.

Another optional rule in this embodiment of this application is that, if the terminal device determines that the current service type is a massive Internet of things (massive IoT or machine type communication) small-sized service, the terminal device communicates with the network device by using the first capability set.

If the terminal device determines that the current service is an ultra-reliable and low latency communication (ultra reliability low latency communication, URLLC) service or an enhanced mobile broadband (enhanced mobile broadband, eMBB) access service, the terminal device communicates with the network device by using the second capability set.

Further, before step S401, the method further includes: The network device sends an eighth message to the terminal device. The eighth message is used to indicate a level of the first capability set and/or a type of the first capability set that are/is supported by the network device. The terminal device may learn of a capability of the network device by using the eighth message, thereby avoiding a communication failure caused due to capability mismatch between the terminal device and the network device.

S402: The terminal device determines the first message. The first message is used to indicate that an update to the first capability set needs to be performed for the terminal device.

The first message includes at least one capability identifier.

The at least one identifier is used to indicate a capability that is included in the second capability set but not included in the first capability set. In other words, the network device may determine the first capability set based on the at least one identifier included in the first message and the second capability set.

For example, it is assumed that the terminal device determines that the first capability set needs to be used to communicate with the network device. The terminal device may determine an identifier of a capability that is in the second capability set and that is not supported in the first capability set, and generate the first message based on the identifier of the capability that is not supported.

It is assumed that the second capability set includes the optional capability 1, the optional capability 2, the optional capability 3, the mandatory capability 1 reported by using signaling, and the mandatory capability 2 reported by using signaling. The first capability set determined by the terminal device includes the optional capability 1. Therefore, the terminal device may determine that the optional capabilities 2 and 3, the mandatory capability 1 reported by using signaling, and the mandatory capability 2 reported by using signaling in the second capability set are not supported in the first capability set. In this case, the terminal device generates the first message. The first message includes an identifier group. The identifier group includes identifiers of the optional capability 2 and the optional capability 3, and identifiers of the mandatory capability 1 reported by using signaling and the mandatory capability 2 reported by using signaling.

Further, in this embodiment of this application, the first message further includes one or more of the following information:

### (1) A reason why the update to the first capability set needs to be performed

For example, the terminal device needs to perform the capability update due to electricity saving. For another example, due to autonomous setting of the user, the terminal device determines that the capability update needs to be performed for the terminal device.

### (3) An application start time of the first capability set

### (4) Application duration of the first capability set

Further, after step S400 and before step S402, the method further includes: The terminal device receives a fourth message sent by the network device.

In this embodiment of this application, the fourth information has a plurality of types of indication content. The indication content is not specifically limited to the following types:
Indication content 1: The fourth information is used to indicate whether the terminal device is allowed to send the first message.
Indication content 2: The fourth information is used to indicate whether the terminal device is allowed to perform a capability update.
Indication content 3: The fourth message is used to indicate whether the terminal device is allowed to use the first capability set.
Indication content 4: The fourth message is used to indicate a range of the capability identifier indicated by the first message.

For example, it is assumed that the second capability set includes the optional capability 1, the optional capability 2, the optional capability 3, the mandatory capability 1 reported by using signaling, and the mandatory capability 2 reported by using signaling. If the range of the fourth message is the optional capability 1 and the optional capability 2, it indicates that the terminal device is allowed to indicate, by using the first message, that the terminal device does not support the optional capability 1 and/or the optional capability 2. In other words, the at least one capability identifier included in the first message can only be of the optional capability 1, the optional capability 2, or the optional capability 1 and the optional capability 2. When the fourth message is sent, the network device and the terminal device may reach an agreement on the update range of the capability information, to avoid a scheduling error caused by inconsistency.

In an optional solution, by default, if the network device does not send the fourth message, the terminal device cannot perform the capability update. The fourth information is used to indicate whether the terminal device is allowed to perform the capability update, to avoid an error caused because the network device cannot recognize the first message sent by the terminal device. If some network devices cannot recognize the first message sent by the terminal device, in this default design, an unnecessary error caused because the terminal device sends a message that the network device cannot recognize the terminal device is avoided.

Further, before the terminal device receives the fourth message sent by the network device, the method further includes: The terminal device sends a fifth message to the network device. The fifth message is used to indicate whether the terminal device supports the update to the first capability set. The network device may send the fourth message only to the terminal device that supports the update to the first capability set, to reduce scheduling complexity.

S403: The terminal device sends the first message to the network device.

Preferably, before the terminal device sends the first message to the network device, the terminal device has a capability of sending the first message to the network device; and/or duration of an interval at which the terminal device continuously sends the first message to the network device is not less than first threshold duration; and/or the network device allows the terminal device to send the first message. For example, the network device configures that the terminal device may send the first message.

The terminal device may notify the network device of the first message by using physical layer signaling, media access control (media access control, MAC) layer signaling, or higher layer signaling.

For example, in a physical layer signaling notification method in this embodiment of this application, the network device is notified of the first message by using a specific physical layer sequence, for example, a sequence having a good correlation feature. For example, a sequence A represents the first message.

In this manner, the terminal device sends the first message by using physical layer signaling, to reduce a time required for updating the capability information and implement a fast capability update.

Another physical layer signaling notification method in this embodiment of this application is notifying the network device by using uplink physical layer control signaling.

In this manner, the terminal device sends the first message by using physical layer signaling, to reduce a time required for updating the capability information and implement a fast capability update.

In a MAC layer signaling notification method in this embodiment of this application, an unused reserved bit in existing MAC signaling is used for notification. For example, a reserved bit in existing buffer status report signaling is used for notification.

In this manner, the terminal device sends the first message by using the reserved bit in the MAC layer signaling, to reduce signaling overheads required for the capability update. In addition, no additional type of signaling needs to be added, and compatibility is relatively good.

In this embodiment of this application, a higher layer signaling notification method is performing notification by using assistance information of the terminal in radio resource control (radio resource control, RRC). A procedure in which the terminal device sends the assistance information is defined in the 3GPP protocol. In this manner, the first message is sent by using the assistance information of the terminal in an RRC message, to reuse a procedure for configuring and sending the assistance information of the terminal. In this way, compatibility is relatively good.

S404: The network device receives the first message sent by the terminal device.

S405: The network device determines, based on the first message, to schedule the terminal device by using the first capability set.

For example, after the network device receives the first message, the network device determines the first capability set based on the identifier group included in the first message and the second capability set. Then, the first capability set is determined as a capability used to schedule the terminal device.

Further, the network device sends the first message of the terminal device to an access and mobility management function (access and mobility management function, AMF) unit. Correspondingly, the AMF updates the capability information of the terminal device to the first capability set indicated by the first message. In this way, when another network device needs to query the capability of the terminal device, the another network device may directly obtain the capability of the terminal device from the AFM. In this way, the terminal device does not need to report the capability of the terminal device through wireless communication, thereby reducing redundancy of air interface transmission.

Further, when the terminal device is handed over, the network device sends, to a handover target cell, the capability information indicated by the first message. In this way, the target cell does not need the terminal device to report the capability of the terminal device through wireless communication, to reduce redundancy of air interface transmission.

Further, when the network device needs to schedule the terminal device, the network device schedules the terminal device based on the capability indicated by the first message.

In other words, a scheduling resource by using which the network device schedules the terminal device does not exceed a range defined by the capability of the terminal device.

That the network device determines, based on the first message, to schedule the terminal device by using the first capability set specifically indicates that the network device performs radio resource control RRC configuration or reconfiguration on the terminal device based on the capability information indicated by the first capability set. The RRC reconfiguration does not exceed a capability indicated by the first capability set. The network device communicates with the terminal device based on a radio resource indicated according to the reconfiguration.

Preferably, in this embodiment of this application, with reference to different content included in the first message, specific execution content of the network device is also different. This is not specifically limited to the following several cases:
In a case 1, when the first message further includes the application duration of the first capability set, after receiving the first message, the network device schedules the terminal device by using the first capability set, and after the application duration of the first capability set ends, communicates with the network device by using the second capability set.
In a case 2, when the first message includes at least two capability sets, an application sequence of the at least two capability sets, and application duration, the network device sequentially uses, according to the application sequence, a first capability set determined based on each capability set to schedule the terminal device for corresponding application duration.

In a scenario 2, the first message carries a capability level or a capability type.

Therefore, the network device that receives the first message determines, based on the capability level or the capability type in the first message, a capability set used to schedule the terminal device.

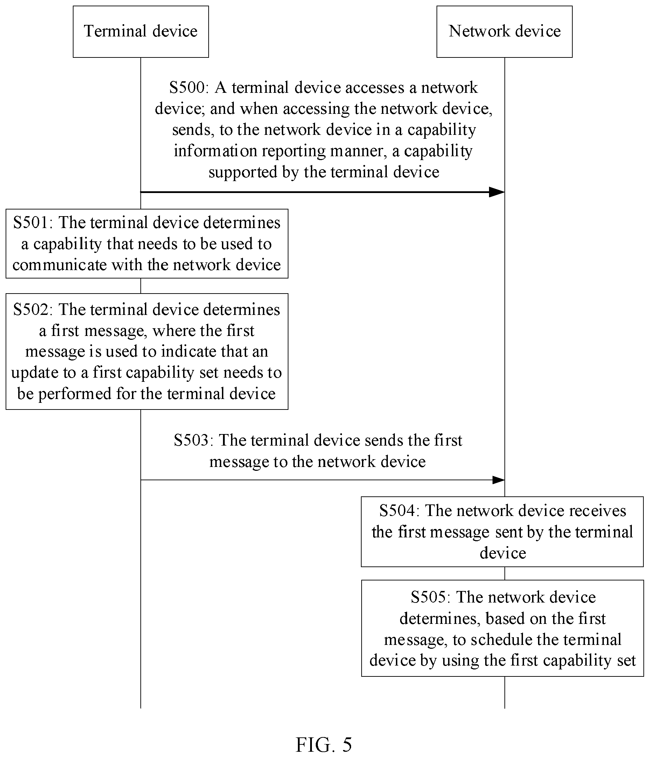

As shown in FIG. 5, based on the scenario 2, specific steps of communication between the terminal device and the network device in this embodiment of this application are as follows:
S500: A terminal device accesses a network device; and when accessing the network device, sends, to the network device in a capability information reporting manner, a capability supported by the terminal device.

For example, when registering with a network, if the terminal device determines that the capability currently supported by the terminal device is a second capability set, the terminal device reports capability information corresponding to the second capability set to the network device.

The capability information corresponding to the second capability set indicates an optional capability defined in a specific protocol that is supported by the terminal device and/or a mandatory capability with capability signaling that is defined in a protocol and that is supported by the terminal device.

In an optional method in this embodiment of this application, the second capability set is a set of all capabilities supported by the terminal device.

For example, the capability information reporting manner uses the conventional technology. One conventional technology is a manner defined in Section 5.6 in 3GPP TS 38.331, and another conventional technology is a manner defined in Section 5.6 in 3GPP TS 36.331. Details are not described in this application.

Further, in this embodiment of this application, the terminal device may determine the capability information of the terminal device in a plurality of manners. In this embodiment of this application, there are a plurality of cases in which the terminal device is triggered to report the capability information to the network device. This is not limited in this embodiment of this application. For a specific determining example, refer to the description in step S400. Details are not described herein again.

S501: The terminal device determines a capability that needs to be used to communicate with the network device.

For example, it is assumed that a capability negotiated by the terminal device with the network device when the terminal device registers with a network is the second capability set. However, currently, when the network device schedules the terminal device, it is more proper to use the first capability set. In this case, the terminal device determines that the first capability set needs to be used during communication with the network device.

In other words, in this case, the terminal device determines that a scheduling capability needs to be changed from the second capability set to the first capability set.

The second capability set is a set of all capabilities supported by the terminal device. The first capability set is a set of a portion of capabilities supported by the terminal device. Based on a range of the set of a portion of capabilities supported in the first capability set, the first capability set may be represented by using a capability level or a capability type.

For example, a level of the first capability set is defined based on a peak rate supported by the terminal device. Different peak rates correspond to at least one parameter supported by the terminal device, where the at least one parameter includes a carrier aggregation capability, a quantity of MIMO layers, a bit rate, and a modulation order. For example, a level 1 indicates that a peak rate of 300 Mbps is supported, a level 2 indicates that a peak rate of 600 Mbps is supported, a level 3 indicates that a peak rate of 1.2 Gbps is supported, and a level 4 indicates a peak rate of 2.3 Gbps.

For another example, a type of the first capability set is defined based on a feature supported by the terminal device. For example, a type 1 represents an eMBB terminal device, a type 2 represents a URLLC terminal device, a type 3 represents a V2X terminal device, a type 4 represents a REDCap terminal device, and a type 5 represents a positioning terminal device with low power consumption.

The level of the first capability set or the type of the first capability set may be agreed in advance. In an agreement manner, the first capability set includes one level. The level correspondingly indicates that the terminal device supports only a basic capability, that is, supports only a mandatory capability without capability signaling. In an agreement manner, the first capability set includes one type. The type correspondingly indicates that the terminal device is a REDCap terminal device.

The level of the first capability set or the type of the first capability set may also be negotiated by using signaling. In an implementation, before step S501, the method further includes step S500-a and/or step S500-b.

Step S500-a: The terminal device sends a second message to the network device. The second message is used to indicate the level of the first capability set supported by the terminal device.

The level of the first capability set of the terminal device corresponds to different peak rates. The level of the first capability supported by the terminal device may be represented by a level number. For example, a level 1 corresponds to 300 Mbps, a level 2 corresponds to 600 Mbps, a level 3 corresponds to 2.3 Gbps, and a level 4 corresponds to 4.6 Gbps. Alternatively, the level may be represented by one or more of parameters corresponding to the peak rate such as a carrier aggregation capability, a quantity of MIMO layers, a bit rate, and a modulation order. For example, if the terminal device supports peak rates of 300 Mbps and 4.6 Gbps, the following two representation manners may be separately used:
Representation manner 1: a number of a capability level supported by the terminal device. For example, the terminal device supports the level 1 and the level 3. The level 1 corresponds to the peak rate of 300 Mbps, and the level 4 corresponds to the peak rate of 2.3 Gbps.
Representation manner 2: a set of values of key parameters that are supported by the terminal device and that are used to calculate the peak rate. For example, the terminal device supports two parameter sets. Herein, a parameter set 1={a maximum quantity of carriers is equal to 1, a maximum carrier bandwidth is equal to 20 MHz, a maximum quantity of MIMO layers is equal to 4, and a maximum modulation order is equal to 64QAM}, and a parameter set 2={a maximum quantity of carriers is equal to 2, a maximum carrier bandwidth is equal to 100 MHz, a maximum quantity of MIMO layers is equal to 4, and a maximum modulation order is equal to 256QAM}. One peak rate may correspond to a value of at least one parameter set.

It should be noted that a correspondence between a capability level and a capability set is merely an example, and is not intended to limit this embodiment of this application.

Step S500-b: The terminal device sends a third message to the network device. The third message is used to indicate the type of the first capability set supported by the terminal device. For example, the third message indicates that the terminal device is in an eMBB type, a URLLC type, a REDCap type, or the like.

It should be noted that a correspondence between a capability type and a capability set is merely an example, and is not intended to limit this embodiment of this application.

That the terminal device determines the capability that needs to be used to communicate with the network device further includes: Before step S501, the terminal device receives a fourth message sent by the network device.

In this embodiment of this application, the fourth information has a plurality of types of indication content. The indication content is not specifically limited to the following types:
Indication content 1: The fourth message is used to indicate whether the terminal device is allowed to perform a capability update.
Indication content 2: The fourth message is used to indicate whether the terminal device is allowed to use the first capability.
Indication content 3: The fourth message is used to indicate a specific first capability level or specific first capability levels that the terminal device is allowed to use.

The network device may allow, based on a status of the network device, the terminal device to use some or all of the first capability levels. When the fourth message is sent, the network device and the terminal device may reach an agreement on an update range of the capability information, to avoid a scheduling error caused by inconsistency.

By default, if the network device does not send the fourth message, the terminal device cannot perform the capability update. The fourth message is used to indicate whether the terminal device is allowed to perform the capability update, to avoid an error caused because the network device cannot recognize the first message sent by the terminal device. If some networks cannot recognize the first message sent by the terminal device, in this default design, an unnecessary error caused because the terminal device sends a message that the network device cannot recognize the terminal device is avoided.

Further, before the terminal device receives the fourth message sent by the network device, the method further includes: The terminal device sends a fifth message to the network device. The fifth message is used to indicate whether the terminal device supports the update to the first capability set. The network device may send the fourth message only to the terminal device that supports the update to the first capability set, to reduce scheduling complexity.

Further, before step S501, the method further includes: The network device sends an eighth message to the terminal device. The eighth message is used to indicate a level of the first capability set and/or a type of the first capability set that are/is supported by the network device. The terminal device may learn of a capability of the network device by using the eighth message, thereby avoiding a communication failure caused due to capability mismatch between the terminal device and the network device.

In this embodiment of this application, the terminal device may determine, in a plurality of manners, a specific capability to be used for scheduling. This is not limited in this embodiment of this application. For a specific determining example, refer to the description in step S401. Details are not described herein again.

S502: The terminal device determines the first message. The first message is used to indicate that the update to the first capability set needs to be performed for the terminal device.

Specifically, the first message includes the capability level of the first capability set or the type of the first capability set.

For example, a sequence A represents a capability level 1, a sequence B represents a capability level 2, and a sequence C represents a capability level 3. Therefore, when the first message needs to be used to indicate the network device to schedule the terminal device by using the first capability set, the first message includes the sequence C, to represent a capability set corresponding to the capability level 3.

Further, in this embodiment of this application, the first message further includes one or more of the following information:
(1) A reason why the update to the first capability set needs to be performed
   For example, the terminal device needs to perform the capability update due to electricity saving. For another example, due to autonomous setting of the user, the terminal device determines that the capability update needs to be performed for the terminal device.
(2) An application start time of the first capability set
(3) Application duration of the first capability set
(4) Capability update sequence

When the first message includes capability levels of more than one first capability set or the type of the first capability set, the first message further includes an update sequence of first capabilities. The capability update sequence indicates an update sequence of a plurality of capability levels or capability types and application duration of each capability level or each capability type.

S503: The terminal device sends the first message to the network device.

Preferably, before the terminal device sends the first message to the network device, the terminal device has a capability of sending the first message to the network device; and/or duration of an interval at which the terminal device continuously sends the first message to the network device is not less than first threshold duration.

The terminal device may notify the network device of the first message in a plurality of manners. This is not limited in this embodiment of this application. For a specific determining example, refer to the description in step S403. Details are not described herein again.

S504: The network device receives the first message sent by the terminal device.

In an optional manner of this embodiment of this application, after receiving the first message, the network device determines, based on content in the first message, that the first message indicates the first capability set.

For example, if the first message includes an identifier of the capability level 3, the network device may determine, based on a correspondence between a capability level and a capability set, that the capability set corresponding to the capability level 3 is the first capability set.

S505: The network device determines, based on the first message, to schedule the terminal device by using the first capability set.

The network device prestores configuration information of a capability corresponding to a corresponding capability level or capability type. Therefore, when the network device receives the first message and determines to use the first capability set to schedule the terminal device, the network device may determine the content in the first capability set based on the prestored configuration information of the capability, and further schedule the terminal device by using the first capability set.

Further, the network device sends the first message of the terminal device to an access and mobility management function AMF unit. Correspondingly, the AMF updates the capability information of the terminal device to the first capability set or the second capability set indicated by the first message. In this way, when another network device needs to query the capability of the terminal device, the another network device may directly obtain the capability of the terminal device from the AFM. In this way, the terminal device does not need to report the capability of the terminal device through wireless communication, thereby reducing redundancy of air interface transmission.

Further, when the terminal device is handed over, the network device sends, to a handover target cell, the capability information indicated by the first message. In this way, the target cell does not need the terminal device to report the capability of the terminal device through wireless communication, to reduce redundancy of air interface transmission.

Further, when the network device needs to schedule the terminal device, the network device schedules the terminal device based on the capability indicated by the first message.

In other words, a scheduling resource by using which the network device schedules the terminal device does not exceed a range defined by the capability of the terminal device.

That the network device determines, based on the first message, to schedule the terminal device by using the first capability set specifically indicates that the network device performs radio resource control RRC configuration or reconfiguration on the terminal device based on the capability information indicated by the first capability set. The RRC reconfiguration does not exceed a capability indicated by the first capability set. The network device communicates with the terminal device based on a radio resource indicated according to the reconfiguration.

Preferably, in this embodiment of this application, with reference to different content included in the first message, specific execution content of the network device is also different. This is not specifically limited to the following several cases:
In a case 1, when the first message further includes the application duration of the capability level or the capability type, after receiving the first message, the network device schedules the terminal device by using the first capability set corresponding to the capability level or the capability type, and after the application duration of the capability level or the capability type ends, communicates with the network device by using the second capability set.
In a case 2, when the first message includes at least two capability levels or capability types, an application sequence of the at least two capability levels or capability types, and application duration, the network device sequentially uses, according to the application sequence, a first capability set determined based on each capability level or each capability type to schedule the terminal device for corresponding application duration.

In a scenario 3, the first message directly indicates the network device to fall back to the first capability set.

In other words, in this embodiment of this application, the first message may not carry other content. The first message directly has an indication function, and is used to indicate the network device to fall back to the first capability set (for example, the first capability set is a basic capability), so that the network device that receives the first message determines, based on the first message, to schedule the terminal device by using the first capability set.

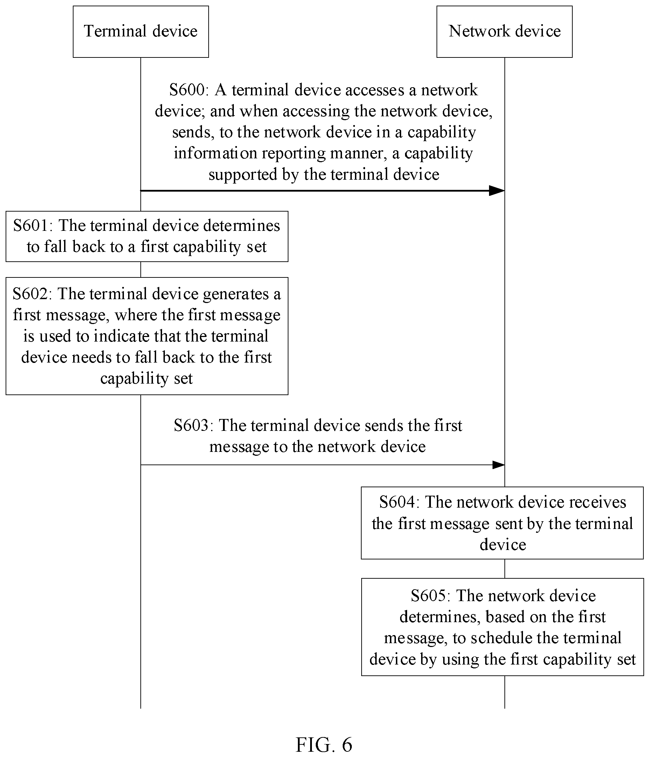

As shown in FIG. 6, based on the scenario 3, specific steps of communication between the terminal device and the network device in this embodiment of this application are as follows:
S600: A terminal device accesses a network device; and when accessing the network device, sends, to the network device in a capability information reporting manner, a capability supported by the terminal device.

For example, when registering with a network, if the terminal device determines that the capability currently supported by the terminal device is a second capability set, the terminal device reports capability information corresponding to the second capability set to the network device. The second capability set indicates an optional capability defined in a specific protocol that is supported by the terminal device and/or a mandatory capability with capability signaling that requires signaling reporting and that is supported by the terminal device. It may be understood that the second capability set is a capability that is used by the network device to schedule the terminal device before the network device receives the first message.

A manner in which the terminal device determines the capability information of the terminal device and a case of triggering reporting of the capability information are the same as those in step S400. For brevity of description, refer to the description in step S400. Details are not described herein again.

S601: The terminal device determines to fall back to a first capability set.

For example, when the terminal device receives an indication triggered by a user and the indication indicates that electricity saving is required, or when an electricity quantity of the terminal device is lower than a specific value, for example, the electricity quantity of the terminal device is lower than 20%, the terminal device determines to perform an energy saving operation, that is, needs to fall back to a basic capability.

Further, before step S601, the method further includes: The network device sends an eighth message to the terminal device. The eighth message is used to indicate whether the network device supports the terminal device in falling back the basic capability. The terminal device may learn of a capability of the network device by using the eighth message, thereby avoiding a communication failure caused due to capability mismatch between the terminal device and the network device.

S602: The terminal device generates a first message. The first message is used to indicate that the terminal device needs to fall back to a first capability set (for example, indicate that the network device needs to fall back the current second capability set to the basic capability).

In an optional manner of this embodiment of this application, the first message indicates that the terminal device does not support all capabilities defined as optional capabilities in the second capability set, and/or the first message indicates that the terminal device does not support all capabilities other than a mandatory capability with capability signaling in the second capability set.

In another optional manner of this embodiment of this application, the first message is used to indicate the network device to schedule the terminal device by using the basic capability.

That the network device determines, based on the first message, to schedule the terminal device by using the first capability set specifically indicates that the network device performs radio resource control RRC configuration or reconfiguration on the terminal device based on the capability information indicated by the first capability set. The RRC reconfiguration does not exceed a capability indicated by the first capability set. The network device communicates with the terminal device based on a radio resource indicated according to the reconfiguration.

Further, after step S600 and before step S602, the method further includes: The terminal device receives a fourth message sent by the network device.

In this embodiment of this application, the fourth information has a plurality of types of indication content. The indication content is not specifically limited to the following types:
Indication content 1: The fourth message is used to indicate whether the terminal device is allowed to send the first message.
Indication content 2: The capability configuration information is used to indicate whether the terminal device is allowed to perform a capability update.
Indication content 3: The fourth message is used to indicate whether the terminal device is allowed to fall back to the basic capability.

When the fourth message is sent, the network device and the terminal device may reach an agreement on an update range of the capability information, to avoid a scheduling error caused by inconsistency.

By default, if the network device does not send the fourth message, the terminal device cannot fall back to the basic capability.

The fourth message is used to indicate whether the terminal device is allowed to perform the capability update, to avoid an error caused because the network device cannot recognize the first message sent by the terminal device. If some networks cannot recognize the first message sent by the terminal device, in this default design, an unnecessary error caused because the terminal device sends a message that the network device cannot recognize the terminal device is avoided.

Further, before the terminal device receives the fourth message sent by the network device, the terminal device sends a fifth message.

In this embodiment of this application, the fifth information has a plurality of types of indication content. The indication content is not specifically limited to the following types:
Indication content 1 is used to indicate whether the terminal device supports the first capability set.
Indication content 2 is used to indicate whether the terminal device supports an update to the first capability set.
Indication content 3 is used to indicate whether the terminal device supports an update from the second capability to the basic capability.

S603: The terminal device sends the first message to the network device.

S604: The network device receives the first message sent by the terminal device.

S605: The network device determines, based on the first message, to schedule the terminal device by using the first capability set.

In an optional manner of this embodiment of this application, if the network device prestores configuration information of the basic capability, after receiving the first message, the network device directly determines the basic capability based on the configuration of the basic capability, and schedules the terminal device by using the basic capability.

In another optional manner of this embodiment of this application, because the network device stores configuration information of the second capability set, after receiving the first message, the network device changes, to unsupported, all capabilities other than all optional capabilities that are supported in the first capability and/or all mandatory capabilities with capability signaling that are supported in the first capability, to determine the configuration of the basic capability; and schedules the terminal device by using the basic capability.

Further, the network device sends the first message to an AMF.

In other words, a scheduling resource by using which the network device schedules the terminal device does not exceed the basic capability of the terminal device.

Further, the network device reserves normal capability configuration of the terminal device. In other words, before receiving the first message, the network device reserves a capability of the terminal device.

In addition, in an optional manner of this embodiment of this application, when the network device determines that the terminal device is handed over, the network device sends a second message to the target network device to which the terminal device is to be handed over.

The second message includes one or more of an initial capability negotiated with the network device when the terminal device registers with a network, a current capability of the terminal device, and a basic capability of performing resource scheduling between the terminal device and the network device.

Further, the network device may configure the terminal device to fall back to a normal capability.

In this embodiment of this application, there are a plurality of cases in which the network device is triggered to configure the terminal device to fall back to the normal capability. Details are not limited to the following several cases:

Trigger case 1:

The network device receives a seventh message sent by the terminal device. The seventh message is used to indicate the network device to update a capability of the terminal device to the normal capability. The network device stores capability information included in the normal capability.

Trigger case 2:

The network device restores a capability of the terminal device to the normal capability after duration after the network device updates the capability of the terminal device to the basic capability reaches threshold duration.

Trigger case 3:

The network device restores a capability of the terminal device to the normal capability based on a resource status of a service transmission application.

In a scenario 4, the network device actively updates a capability set used to schedule the terminal device, and notifies the terminal device by using sixth information.

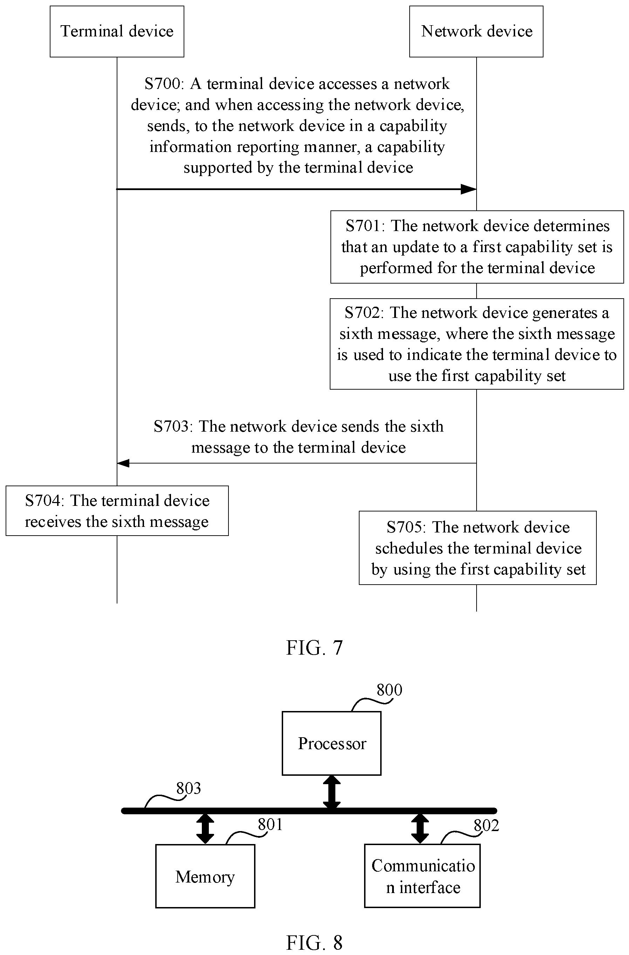

As shown in FIG. 7, based on the scenario 4, specific steps of communication between the terminal device and the network device in this embodiment of this application are as follows:
S700: A terminal device accesses a network device; and when accessing the network device, sends, to the network device in a capability information reporting manner, a capability supported by the terminal device.

For example, when registering with a network, if the terminal device determines that the capability currently supported by the terminal device is a second capability set, the terminal device reports capability information corresponding to the second capability set to the network device. The second capability set indicates an optional capability defined in a specific protocol that is supported by the terminal device and/or a mandatory capability with capability signaling that requires signaling reporting and that is supported by the terminal device.

Further, a first capability set is defined in this application. The first capability set is a portion of capabilities that are not supported by the terminal device in the second capability set. For example, the first capability set is determined after at least one optional capability and/or at least one mandatory capability with capability signaling are/is removed from the second capability set. It may be understood that the first capability set is a capability lower than the second capability set.

Further, in an optional manner of this embodiment of this application, the first capability set is a basic capability. To be specific, the terminal device supports only all capabilities that are defined in a protocol and that this type of terminal device needs to support or a mandatory capability without capability reporting signaling.

A manner in which the terminal device determines the capability information of the terminal device and a case of triggering reporting of the capability information are the same as those in step S400. For brevity of description, refer to the description in step S400. Details are not described herein again.

S701: The network device determines that an update to the first capability set is performed for the terminal device.

In an optional embodiment, the network device determines, based on assistance information reported by the terminal device, that the update to the first capability set is performed for the terminal device. For example, if the terminal device reports that the terminal device is in an overheated state, the network device determines that the update to the first capability set is performed for the terminal device.

In an optional embodiment, the network device determines, based on a service of the terminal device, that a capability of scheduling the terminal device needs to be updated to the first capability set. For example, if the terminal device has only a relatively small quantity of data packets to be transmitted, the network device determines that the update to the first capability set is performed for the terminal device, to reduce power consumption of the terminal device.

In an optional embodiment, the network device determines, based on a status of the network device, that the update to the first capability set is performed for the terminal device. For example, if the network device is in a busy state, the network device determines to update the capability for scheduling the terminal device to the first capability set.

Further, before step S701, the method further includes: The network device receives a second message sent by the terminal device to the network device. The second message is used to indicate one or more levels of first capability sets supported by the terminal device. In an implementation method, the second message is used to indicate that a level of the first capability set supported by the terminal device is a basic capability.

Further, before step S701, the method further includes: The network device receives a third message sent by the terminal device to the network device. The third message is used to indicate one or more types of first capability sets supported by the terminal device.

Further, before step S701, the method further includes: The network device receives a fifth message sent by the terminal device to the network device. The fifth message is used to indicate whether the terminal device supports the first capability set, or is used to indicate whether the terminal device supports the update to the first capability set, or is used to indicate whether the terminal device supports an update from the second capability to the basic capability.

S702: The network device generates sixth information. The sixth message is used to indicate the terminal device to use the first capability set.

The sixth information is used to indicate the network device to schedule the terminal device by using the first capability set.

Further, in this embodiment of this application, the sixth message further includes one or more of the following information:
(1) When the first capability set includes a plurality of levels or a plurality of types, the sixth message indicates a level or a type of the first capability set. When the first capability set is a basic capability, the sixth message indicates that the first capability set is the basic capability set.
(2) A reason why the update to the first capability set needs to be performed
   For example, the terminal device needs to perform the capability update due to electricity saving. For another example, due to autonomous setting of the user, the terminal device determines that the capability update needs to be performed for the terminal device.
(3) An application start time of the first capability set
(4) Application duration of the first capability set
(5) Capability update sequence
(6) At least one capability identifier The at least one identifier is used to indicate a capability that is included in the second capability set but not included in the first capability set. In other words, the terminal device may determine the first capability set based on the at least one identifier included in the sixth message and the second capability set.

S703: The network device sends the sixth message to the terminal device.

S704: The terminal device receives the sixth message.

After receiving the sixth message, the terminal device determines that the network device performs scheduling by using the first capability set indicated by the sixth message.

In an optional embodiment, the terminal device performs corresponding software and hardware configuration by using the first capability set indicated by the sixth message, to support or not support the first capability set indicated by the sixth message.

Preferably, if the terminal device determines to support the first capability set indicated by the network device by using the first message, the terminal device may feed back, to the network device, that the first capability set is supported; or if the terminal device determines not to support the first capability set indicated by the network device by using the first message, the terminal device may feed back, to the network device, that the first capability set is not supported.

S705: The network device schedules the terminal device by using the first capability set.

In an optional manner of this embodiment of this application, when the first capability set is the basic capability, because the network device stores configuration information of the second capability set, the network device changes, to unsupported, all optional capabilities supported in the second capability set when determining to schedule the terminal device by using the first capability set, to determine configuration of the basic capability; and schedules the terminal device by using the basic capability.

Further, the network device sends the first message to an AMF.

In other words, a scheduling resource by using which the network device schedules the terminal device does not exceed the basic capability of the terminal device.

Further, the network device reserves normal capability configuration of the terminal device. In other words, the network device reserves the received second capability set of the terminal device.

In addition, in an optional manner of this embodiment of this application, when the network device determines that the terminal device is handed over, the network device sends a second message to the target network device to which the terminal device is to be handed over.

The second message includes one or more of an initial capability negotiated with the network device when the terminal device registers with a network, a current capability of the terminal device, and a basic capability of performing resource scheduling between the terminal device and the network device.

Further, the network device may configure the terminal device to fall back to a normal capability.

In this embodiment of this application, there are a plurality of cases in which the network device is triggered to configure the terminal device to fall back to the normal capability. Details are not limited to the following several cases:
In this embodiment of this application, there are a plurality of cases in which the network device is triggered to configure the terminal device to fall back to the normal capability. Details are not limited to the following several cases:
Trigger case 1:
   The network device receives a seventh message sent by the terminal device. The seventh message is used to indicate the network device to update a capability of the terminal device to the normal capability. The network device stores capability information included in the normal capability.
Trigger case 2:
   The network device restores a capability of the terminal device to the normal capability after duration after the network device updates the capability of the terminal device to the basic capability reaches threshold duration.
Trigger case 3:
   The network device restores a capability of the terminal device to the normal capability based on a resource status of a service transmission application.

That the network device determines, based on the first message, to schedule the terminal device by using the first capability set specifically indicates that the network device performs radio resource control RRC configuration or reconfiguration on the terminal device based on the capability information indicated by the first capability set. The RRC reconfiguration does not exceed a capability indicated by the first capability set. The network device communicates with the terminal device based on a radio resource indicated according to the reconfiguration.

Based on the foregoing descriptions of the solutions in this application, it may be understood that, to implement the foregoing functions, the foregoing devices include corresponding hardware structures and/or software modules for performing the functions. A person skilled in the art should be easily aware that units, algorithms, and steps in the examples described with reference to the embodiments disclosed in this specification can be implemented in a form of hardware or a combination of hardware and computer software in this application. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

Based on the foregoing embodiments, as shown in FIG. 8, this application provides a communication apparatus. The apparatus includes a processor 800, a memory 801, and a communication interface 802.

The processor 800 is responsible for managing bus architecture and general processing. The memory 801 may store data used when the processor 800 performs an operation. The transceiver communication interface 802 is configured to receive and send data under control of the processor 800, to perform data communication with the memory 801.

The processor 800 may be a central processing unit (central processing unit, CPU), a network processor (network processor, NP), or a combination of a CPU and an NP. The processor 800 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof. The memory 801 may include: any medium that can store program code, such as a USB flash drive, a removable hard disk, a read-only memory (read-only memory, ROM), a random access memory (random access memory, RAM), a magnetic disk, or a compact disc.

The processor 800, the memory 801, and the communication interface 802 are connected to each other. Optionally, the processor 800, the memory 801, and the communication interface 802 may be connected to each other by using a bus 803. The bus 803 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 8, but this does not mean that there is only one bus or only one type of bus.

Specifically, when the communication apparatus is a terminal device, the processor 800 is configured to: read a program in the memory 801, and perform the method procedure performed by the terminal device in steps S300 to S303 shown in FIG. 3; or perform the method procedure performed by the terminal device in steps S400 to S405 shown in FIG. 4; or perform the method procedure performed by the terminal device in steps S500 to S505 shown in FIG. 5; or perform the method procedure performed by the terminal device in steps S600 to S605 shown in FIG. 6; or perform the method procedure performed by the terminal device in steps S700 to S705 shown in FIG. 7.

When the communication apparatus is a network device, the processor 800 is configured to: read a program in the memory 801, and perform the method procedure performed by the network device in steps S300 to S303 shown in FIG. 3; or perform the method procedure performed by the network device in steps S400 to S405 shown in FIG. 4; or perform the method procedure performed by the network device in steps S500 to S505 shown in FIG. 5; or perform the method procedure performed by the network device in steps S600 to S605 shown in FIG. 6; or perform the method procedure performed by the network device in steps S700 to S705 shown in FIG. 7.

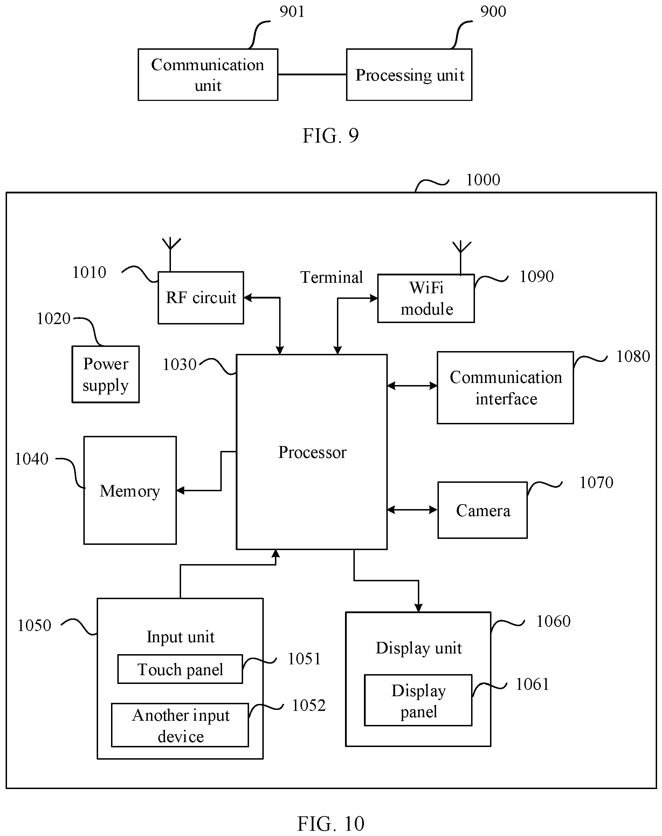

As shown in FIG. 9, this application provides a communication apparatus. The apparatus includes a processing unit 900 and a communication unit 901.

When the apparatus is a terminal device, in an optional manner, the processing unit 900 and the communication unit 901 are configured to perform the following content:
The processing unit 900 is configured to determine that an update to a first capability set needs to be performed.

The communication unit 901 is configured to send a first message to a network device. The first message is used to indicate that the update to the first capability set needs to be performed for a terminal device. The first capability set includes a portion of capabilities in a second capability set. The second capability set is a capability set negotiated by the terminal device with the network device when the terminal device initially accesses the network device.

When the apparatus is a network device, in an optional manner, the processing unit 900 and the communication unit 901 are configured to perform the following content:

The communication unit 901 is configured to receive a first message from a terminal device.

The processing unit 900 is configured to determine, based on the first message, to schedule the terminal device based on a first capability set. The first capability set includes a portion of capabilities in a second capability set. The second capability set is a capability set negotiated by the terminal device with a network device when the terminal device initially accesses the network device.

It should be noted that the communication unit 901 may include different communication units that respectively correspond to different communication interfaces.

In addition, the communication apparatus shown in FIG. 9 may further include a storage unit 902. The storage unit 902 may store program code used by the processing unit 900 to perform the communication method. The storage unit 902 may further store data used when the processing unit 900 performs an operation, and the like. The apparatus in the foregoing embodiment may be a terminal device, or may be a chip applied to a terminal device, or another component, another part, or the like that can implement a combination of functions of the terminal device. When the apparatus is a terminal device, a transceiver unit may be a transmitter and a receiver, or an integrated transceiver; and may include an antenna, a radio frequency circuit, and the like. The processing unit may be a processor, for example, a baseband chip. When the apparatus is a component having the functions of the terminal device, the transceiver unit may be a radio frequency unit, and the processing module may be a processor. When the communication apparatus is a chip system, the transceiver unit may be an input/output interface of the chip system, and the processing unit may be a processor of the chip system, for example, a central processing unit (central processing unit, CPU).

For detailed description of the functions or the performed operations of the terminal device provided in this application, refer to the steps performed by the terminal device in the method embodiments of this application. Details are not described herein again.

For detailed description of the functions or the performed operations of the network device provided in this application, refer to the steps performed by the network device in the method embodiments of this application. Details are not described herein again.

Based on the same concept, an embodiment of this application provides a terminal device. The terminal device may be a scheduling terminal device and/or a transmit terminal device. As shown in FIG. 10, a terminal 1000 includes components such as a radio frequency (radio frequency, RF) circuit 1010, a power supply 1020, a processor 1030, a memory 1040, an input unit 1050, a display unit 1060, a camera 1070, a communication interface 1080, and a wireless fidelity (wireless fidelity, WiFi) module 1090. A person skilled in the art may understand that a structure of the terminal shown in FIG. 10 does not constitute a limitation on the terminal, and the terminal provided in this embodiment of this application may include more or fewer components than those shown in the figure, or combine some components, or have different component arrangements.

The following describes each component of the terminal 1000 in detail with reference to FIG. 10.

The RF circuit 1010 may be configured to receive and send data in a communication or call process. Specifically, after receiving downlink data from a base station, the RF circuit 1010 sends the downlink data to the processor 1030 for processing, and sends to-be-sent uplink data to the base station. Generally, the RF circuit 1010 includes but is not limited to an antenna, at least one amplifier, a transceiver, a coupler, a low noise amplifier (low noise amplifier, LNA), and a duplexer.

In addition, the RF circuit 1010 may further communicate with a network and another terminal through wireless communication. The wireless communication may use any communication standard or protocol, including but not limited to global system for mobile communication (global system for mobile communication, GSM), a general packet radio service (general packet radio service, GPRS), code division multiple access (code division multiple access, CDMA), wideband code division multiple access (wideband code division multiple access, WCDMA), long term evolution (long term evolution, LTE), an email, a short message service (Short Messaging Service, SMS), and the like.

A WiFi technology belongs to a short-distance wireless transmission technology. The terminal 1000 may be connected to an access point (access point, AP) by using the WiFi module 1090, to access a data network. The WiFi module 1090 may be configured to receive and send data in a communication process.

The terminal 1000 may be physically connected to another terminal by using the communication interface 1080. Optionally, the communication interface 1080 is connected to a communication interface of the another terminal by using a cable, to implement data transmission between the terminal 1000 and the another terminal.

The terminal 1000 can implement a communication service and send an information message to another contact. Therefore, the terminal 1000 needs to have a data transmission function, that is, the terminal 1000 needs to include a communication module. Although FIG. 10 shows the communication modules such as the RF circuit 1010, the WiFi module 1090, and the communication interface 1080, it may be understood that the terminal 1000 includes at least one of the foregoing components or another communication module (for example, a bluetooth module) used to implement communication, to perform data transmission.

The memory 1040 may be configured to store a software program and a module. The processor 1030 runs the software program and the module stored in the memory 1040, to perform various functional applications of the terminal 1000 and data processing. In addition, after executing the program code in the memory 1040, the processor 1030 may implement some or all processes in the embodiments of this application.

Optionally, the memory 1040 may mainly include a program storage area and a data storage area. The program storage area may store an operating system, various application programs (for example, a communication application), a facial recognition module, and the like. The data storage area may store data (for example, a multimedia file such as various pictures and video files, and a face message template) created based on use of the terminal device, and the like.

In addition, the memory 1040 may include a high-speed random access memory, or may include a nonvolatile memory, such as at least one magnetic disk storage device, a flash memory device, or another volatile solid-state storage device.

The input unit 1050 may be configured to: receive a digit or character message entered by a user, and generate key signal input related to user setting and function control of the terminal 1000.

Optionally, the input unit 1050 may include a touch control panel 1051 and another input device 1052.

The processor 1030 is a control center of the terminal 1000, is connected to all components by using various interfaces and lines, and executes various functions of the terminal 1000 and processes data through running or executing the software program and/or the module stored in the memory 1040 and invoking data stored in the memory 1040. Therefore, a plurality of services based on the terminal are implemented.

Optionally, the processor 1030 may include one or more processing units. Optionally, the processor 1030 may integrate an application processor and a modem processor. The application processor mainly processes an operating system, a user interface, an application program, and the like. The modem processor mainly processes wireless communication. It may be understood that the foregoing modem processor may be not integrated into the processor 1030.

The camera 1070 is configured to implement a photographing function of the terminal 1000, to obtain a picture or a video through photographing.

The terminal 1000 further includes a power supply 1020 (for example, a battery) configured to supply power to each component.

Although not shown, the terminal 1000 may further include at least one sensor, an audio frequency circuit, and the like. Details are not described herein.

The memory 1040 may store program code the same as that in the storage unit 902. When the program code is executed by the processor 1030, the processor 1030 is enabled to implement all functions of the processing unit 900.

In some possible implementations, aspects of the communication method provided in the embodiments of this application may be further implemented in a form of a program product. The program product includes program code. When the program code is run on a computer device, the program code is used to enable the computer device to perform the steps in the communication method according to various example implementations of this application described in this specification.

The program product may be any combination of one or more readable media. The readable medium may be a readable signal medium or a readable storage medium. For example, the readable storage medium may be, but is not limited to, an electrical, a magnetic, an optical, an electromagnetic, an infrared, or a semiconductor system, apparatus or device, or any combination thereof. More specific examples (a non-exhaustive list) of the readable storage medium in this embodiment of this application include: an electrical connection having one or more conducting wires, a portable disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any proper combination thereof.

A program product used for capability negotiation for a terminal device according to an implementation of this application may use a portable compact disc read-only memory (CD-ROM) and include program code, and may be run on a server device. However, the program product in this application is not limited thereto. In this specification, the readable storage medium may be any tangible medium including or storing a program. The program may be transmitted as a message, or used by or in combination with an apparatus or a device.

The readable signal medium may include a data signal propagated in a baseband or as a part of a carrier. The data signal carries readable program code. The propagated data signal may be in a plurality of forms, including but not limited to an electromagnetic signal, an optical signal, or any proper combination thereof. The readable signal medium may alternatively be any readable medium other than the readable storage medium. The readable medium may send, propagate, or transmit a program used by or in combination with a periodic network action system, apparatus, or device.

The program code included in the readable medium may be transmitted by using any proper medium, including but not limited to a wireless medium, a wired medium, an optical cable, an RF medium, or any proper combination thereof.

The program code used to execute the operations of this application may be written in any combination of one or more program design languages. The program design languages include object-oriented program design languages such as Java and C++, and further include a conventional procedural program design language such as a "C" language or a similar program design language. The program code may be all executed on a computing device of a user, partially executed on user equipment, executed as an independent software package, partially executed on a computing device of a user and partially executed on a remote computing device, or all executed on a remote computing device or server. When the program code is executed on the remote computing device, the remote computing device may be connected to the computing device of the user by using any type of network, including a local area network (LAN) or a wide area network (WAN), or may be connected to an external computing device.

An embodiment of this application further provides a computing device readable storage medium for a communication method, so that content is not lost after a power failure. The storage medium stores a software program including program code. When the program code is run on a computing device, any solution of the communication method in the foregoing embodiments of this application can be implemented when the software program is read and executed by one or more processors.

The foregoing describes this application with reference to the block diagrams and/or flowcharts of the method, the apparatus (system), and/or the computer program product in the embodiments of this application. It should be understood that a block of the block diagrams and/or flowcharts and a combination of blocks in the block diagrams and/or flowcharts can be implemented by using computer program instructions. These computer program instructions may be provided to a processor of a general-purpose computer, a processor of a dedicated computer, and/or another programmable data processing apparatus to produce a machine, so that the instructions executed by the processor of the computer and/or the another programmable data processing apparatus create a method for implementing a specific function/action in the block in the flowcharts and/or block diagrams.

Correspondingly, this application may further be implemented by using hardware and/or software (including firmware, resident software, microcode, and the like). Still further, this application may be in a form of a computer program product on a computer-usable or computer-readable storage medium. The computer program product has computer-usable or computer-readable program code implemented in the medium, so that the computer-usable or computer-readable program code is used by an instruction execution system or used in combination with an instruction execution system. In the context of this application, the computer-usable or computer-readable medium may be any medium, and may include, store, communicate, transmit, or transfer a program, for use by an instruction execution system, apparatus, or device or used in combination with an instruction execution system, apparatus, or device.

Although this application is described with reference to specific features and all the embodiments thereof, it is clear that various modifications and combinations may be made to them without departing from the spirit and scope of this application. Correspondingly, this specification and the accompanying drawings are merely example description of this application defined by the appended claims, and are considered as any or all of modifications, variations, combinations, or equivalents that cover the scope of this application. It is clear that a person skilled in the art can make various modifications and variations to this application without departing from the scope of this application. In this way, this application is intended to cover these modifications and variations of this application provided that they fall within the scope of the claims of this application and their equivalent technologies.

## Claims

1. A communication method, comprising:
determining that an update to a first capability set needs to be performed; and
sending a first message to a network device, wherein the first message is used to indicate that the update to the first capability set needs to be performed for a terminal device, the first capability set comprises a portion of capabilities in a second capability set, and the second capability set is a capability set negotiated by the terminal device with the network device when the terminal device initially accesses the network device.

2. The method according to claim 1, wherein the first capability set is a capability in the second capability set except at least one optional capability and/or at least one mandatory capability with capability signaling.

3. The method according to claim 1, wherein the first capability set is a mandatory capability without capability signaling in the second capability set.

4. The method according to any one of claims 1 to 3, wherein a size of the first message is 1 bit.

5. The method according to any one of claims 1 to 4, wherein the first message comprises at least one identifier, and the at least one identifier is used to indicate a capability that is comprised in the second capability set but not comprised in the first capability set.

6. The method according to any one of claims 1 to 4, wherein the first message is used to indicate a level of the first capability set.

7. The method according to any one of claims 1 to 6, wherein the first message is further used to indicate at least one of the following: a reason why the update to the first capability set needs to be performed, an application start time of the first capability set, and application duration of the first capability set.

8. A communication method, comprising:
receiving a first message from a terminal device; and
determining, based on the first message, to schedule the terminal device based on a first capability set, wherein the first capability set comprises a portion of capabilities in a second capability set, and the second capability set is a capability set negotiated by the terminal device with a network device when the terminal device initially accesses the network device.

9. The method according to claim 8, wherein the first capability set is a capability in the second capability set except at least one optional capability and/or at least one mandatory capability with capability signaling.

10. The method according to claim 8, wherein the first capability set is a mandatory capability without capability signaling in the second capability set.

11. The method according to any one of claims 8 to 10, wherein a size of the first message is 1 bit.

12. The method according to any one of claims 8 to 11, wherein the first message comprises at least one identifier, and the at least one identifier is used to indicate a capability that is comprised in the second capability set but not comprised in the first capability set.

13. The method according to any one of claims 8 to 11, wherein the first message is used to indicate a level of the first capability set.

14. The method according to any one of claims 8 to 13, wherein the first message is further used to indicate at least one of the following: a reason why the update to the first capability set needs to be performed, an application start time of the first capability set, and application duration of the first capability set.

15. A communication apparatus, comprising a processing unit and a communication unit, wherein
the processing unit is configured to determine that an update to a first capability set needs to be performed; and
the communication unit is configured to send a first message to a network device, wherein the first message is used to indicate that the update to the first capability set needs to be performed for a terminal device, the first capability set comprises a portion of capabilities in a second capability set, and the second capability set is a capability set negotiated by the terminal device with the network device when the terminal device initially accesses the network device.

16. A communication apparatus, comprising a processing unit and a communication unit, wherein
the communication unit is configured to receive a first message from a terminal device; and
the processing unit is configured to determine, based on the first message, to schedule the terminal device based on a first capability set, wherein the first capability set comprises a portion of capabilities in a second capability set, and the second capability set is a capability set negotiated by the terminal device with a network device when the terminal device initially accesses the network device.

17. A communication apparatus, comprising a processor, a communication interface, and a memory, wherein
the memory is configured to store program instructions; and
the processor is configured to invoke the program instructions stored in the memory, to perform, by using the communication interface, the method according to any one of claims 1 to 7 or the method according to any one of claims 8 to 14.

18. A communication system, comprising a network device and a terminal device, wherein
the terminal device is configured to perform the method according to any one of claims 1 to 7; and
the network device is configured to perform the method according to any one of claims 8 to 14.

19. A computer readable storage medium, comprising computer instructions, wherein when the computer instructions are run on a terminal device, the terminal device is enabled to perform the method according to any one of claims 1 to 7; and
when the computer instructions are run on a network device, the network device is enabled to perform the method according to any one of claims 8 to 14.

20. A computer program product, wherein the computer program product comprises computer instructions, and when the computer instructions are executed by a terminal device, the terminal device is enabled to perform the method according to any one of claims 1 to 7; and when the computer instructions are executed by a network device, the network device is enabled to perform the method according to any one of claims 8 to 14.
